# EUROPEAN PATENT SPECIFICATION

(11) **EP 2 628 718 B1**
(45) Date of publication and mention of the grant of the patent: **20.03.2019**
(21) Application number: 11849500.1
(22) Date of filing: 08.12.2011
(51) Int. Cl.: C04B 40/02, B28B 11/24, C04B 28/02

(54) **CARBONATION CURING EQUIPMENT, PROCESS FOR PRODUCING CARBONATED CONCRETE, AND USE OF THIS METHOD FOR FIXING CARBON DIOXIDE**
KARBONISIERUNGSHÄRTUNGSVORRICHTUNG, VERFAHREN ZUR HERSTELLUNG VON KARBONISIERTEM BETON UND VERWENDUNG DES VERFAHREN ZUR BINDUNG VON KOHLENDIOXID
ÉQUIPEMENT DE DURCISSEMENT PAR CARBONATATION, PROCÉDÉ DE FABRICATION DE BÉTON CARBONATÉ ET UTILISATION DE CE PROCÉDÉ POUR FIXATION DE DIOXYDE DE CARBONE

(30) Priority: 17.12.2010 JP 2010281273
(43) Date of publication of application: 21.08.2013
(73) Proprietor: The Chugoku Electric Power Co., Inc., Hiroshima-shi Hiroshima 730-8701 (JP); Denka Company Limited, Tokyo 103-8338 (JP); KAJIMA CORPORATION, Tokyo 107-8388 (JP)
(72) Inventor: MATSUBARA, Atsunori, Hiroshima-shi, Hiroshima 730-8701 (JP); YOSHIOKA, Ichiro, Hiroshima-shi, Hiroshima 730-8701 (JP); OBATA, Daisaku, Hiroshima-shi, Hiroshima 730-8701 (JP); OIKAWA, Takahito, Hiroshima-shi, Hiroshima 730-8701 (JP); YOKOTA, Hidetsugu, Hiroshima-shi, Hiroshima 730-8701 (JP); YAMAMOTO, Kenji, Itoigawa-shi, Niigata 949-0393 (JP); YAGI, Toru, Itoigawa-shi, Niigata 949-0393 (JP); KUSHIHASHI, Takumi, Itoigawa-shi, Niigata 949-0393 (JP); MORIOKA, Minoru, Tokyo 103-8338 (JP); YOKOZEKI, Kosuke, Tokyo 107-8388 (JP); TORICHIGAI, Takeshi, Tokyo 107-8388 (JP); KOBAYASHI, Satoru, Tokyo 107-8388 (JP); SEKI, Kengo, Tokyo 107-8388 (JP); ASHIZAWA, Ryoichi, Tokyo 107-8388 (JP)
(74) Representative: Gill, David Alan
(86) International application number: PCT/JP2011/078401
(87) International publication number: WO 2012/081486

(56) References cited:
- CA-A1- 970 935
- GB-A- 2 106 886
- GB-A- 2 192 392
- JP-A- 9 059 050
- JP-A- 63 210 054
- JP-A- 2002 292 612
- JP-A- 2002 293 601
- JP-A- 2006 143 531
- US-A- 4 427 610
- US-A- 5 690 729
- US-A1- 2010 000 444
- US-A1- 2010 077 691
- US-A1- 2010 083 880

## Description

### BACKGROUND OF THE INVENTION

### Field of the Invention

The present invention relates to carbonation curing equipment, a carbonated concrete producing method and the use of this method for fixing carbon dioxide. More particularly, the present invention relates to carbonation curing equipment, a carbonated concrete producing method and the use of this method for fixing carbon dioxide each of which utilizes a thermal power plant as a carbon dioxide source for carbonation-curing an object to be cured.

### Background Art

In recent years, the durability over a long period of time, that is, more than 100 years, has been demanded with respect to concrete structures. Under the circumstances, there have been proposed a variety of carbonated concrete producing methods for producing extremely fine concrete (hereinafter, referred to as "carbonated concrete") by forced-carbonation-curing with the addition of the special additive (admixture), and repairing methods using the carbonated concrete.

For example, the carbonation curing equipment disclosed in JP-A-2009-149456 has a shielded space storing a hardened cement paste and shielding the same from the external atmospheric environment, the shielded space has a gas introduction port connected to a carbon dioxide feed source via a gas flow rate regulation mechanism and a gas exhaust port connected to the outside via a gas inflow prevention mechanism, and the gas flow rate regulation mechanism and the gas inflow prevention mechanism can be subjected to a switching operation in such a manner that the control mode of the internal atmosphere is set to at least either a "gas replacement mode" or a "stationary mode", in order to maintain the concentration of carbon dioxide gas to an optional concentration exceeding 20% (preferably, to an optional concentration exceeding 30%).

The production method disclosed in JP-A-2006-182583 is to produce a mortar or concrete having a compacted surface layer, that is, a cured product of a kneaded material containing 8 to 70 mass parts of γ-belite against 100 mass parts of cement, wherein the mortar or concrete has a compacted layer in its surface layer part and has a porosity ratio of K1/K2 of 0.8 or less wherein K1 represents the porosity of the compacted layer and K2 represents the porosity of the inner part excluding the compacted layer, in order to provide a durable cement-based material improved in resistance against Ca-elution, salt damage, scaling, and freezing and thawing.

The floor slab repairing method disclosed in JP-A-2006-348465 is to provide an efficient floor slab repairing process using a precast floor slab which exerts durability over a long period of time. The composite precast floor slab is composed of a slab in which a carbonated cement-based member, obtained by carbonating a hardened cement paste containing γC₂S, and an uncarbonated concrete member are joined together. In the composite precast floor slab, at least one broad surface of the slab is composed of a surface of the carbonated cement-based member. In the floor slab repairing method, a part including a deteriorated place on the top surface of the floor slab of a concrete structure is chipped, and the composite precast floor slab is installed in place of a chipped part in such a manner that the carbonated cement-based member is positioned on an upper surface.

Furthermore, GB2192392A, US4427610A, GB2106886A and CA970935A1 relate to equipment used in methods producing carbonated concrete, which comprises a carbonation curing tank having a shielded internal space. The supply source of the CO2 is a container, a tank, a bottle or similar.

A method of compressing, liquefying and/or cooling carbon dioxide for use in carbon curing concrete is described in US5690729A.

The idea of combining two plants on the same site and directly supplying the source gas of the first coal fired plant, to a second precipitation plant via a duct is described in US2010/000444A1.

Further shaping of articles from the cement on site is described in US2010/77691A1 and US 2010/083880A1, however do not discuss using carbon dioxide to cure concrete articles.

### Technical Problem and Its Solution

However, in order to carry out the carbonated concrete producing method or the repairing method using carbonated concrete disclosed in JP-A-2009-149456, JP-A-2006-182583 and JP-A-2006-348465, concrete (an object to be cured) needs to be carbonation-cured using carbon dioxide (CO₂ gas) at the concentration of 20 to 100%. On the other hand, in the past, the carbon dioxide cylinder at the concentration of 100%, which is commercially available, has been used as the carbon dioxide source.

In order to mass-produce the carbonated concrete, there is needed the carbon dioxide source with which it is possible to supply massive carbon dioxide in a stable manner. However, with the use of the commercial carbon dioxide cylinder as the carbon dioxide source, there is a problem of economic limitations on the carbonation curing.

Meanwhile, the carbonated concrete producing method disclosed in JP-A-2009-149456 is effective to produce carbonated concrete using the carbon dioxide cylinder as the carbon dioxide source, but it is required to use the gas flow rate regulation mechanism for regulating the flow rate of the carbon dioxide supplied to the shielded space and the unit to exhaust the carbon dioxide from the shielded space.

The purpose of the present invention is to provide carbonation curing equipment, a carbonated concrete producing method and the use of the method for fixing carbon dioxide with which it is possible to economically mass-produce carbonated concrete and to greatly reduce carbon dioxide emissions from a thermal power plant.

Carbonation curing equipment according to the present invention comprises carbonation curing equipment (10) for use in producing carbonated concrete, and is characterised by comprising a carbonation curing tank (11) having a shielded internal space wherein in the carbonation curing tank (11), an object, namely concrete (hardened cement paste), to be carbonation-cured is held in such a manner that its surface necessary to be carbonated is exposed to the gas atmosphere in a shielded space and in a form-removal state; a flue gas circulator (12) for supplying flue gas exhausted from a thermal power plant (1) to the inside of the carbonation curing tank (11) and for circulating the flue gas in the carbonation curing tank (11); a temperature/humidity regulating device (13) for regulating the temperature and humidity of the flue gas in the carbonation curing tank (11); a flue gas feed pipe branched out from a flue (3) for communicating (connecting) a flue gas exhaust port of the thermal power plant (1) and a chimney (2), wherein the flue gas exhausted (discharged)from the thermal power plant (1) is supplied to the inside of the carbonation curing tank (11) through an air conveying blower (4) provided at the flue gas feed pipe (3) and through the flue gas circulator (12) during the carbonation curing period.

Optionally, the flue gas exhausted from the thermal power plant is supplied to the inside of the carbonation curing tank without regulating the concentration and the flow rate, and the object to be cured held in the carbonation curing tank is carbonation-cured.

The carbonation curing equipment may further comprise a device (14) for bringing the flue gas exhausted from the thermal power plant into contact with water or water vapor before the flue gas is supplied to the inside of the carbonation curing tank.

The volume of the object to be cured held in the carbonation curing tank may be such that the total amount of carbon dioxide emissions due to power consumption of the carbonation curing equipment during the carbonation curing period and carbon dioxide emissions due to concrete is equal to or less than "0."

Optionally, all of the flue gas exhausted from the thermal power plant may supplied to the inside of the carbonation curing tank during the carbonation curing period.

A carbonated concrete producing method according to the present invention is characterized by comprising a first step of holding an object, namely concrete (hardened cement paste), to be cured in a carbonation curing tank (11) of a carbonation curing equipment (10), wherein the carbonation curing tank has a shielded internal space; and a second step of supplying flue gas exhausted from a thermal power plant (1) to the inside of the carbonation curing tank in order to utilise the thermal power plant as a carbon dioxide source for carbonation-curing the object to be cured.

Further optionally, in the second step, the object to be cured held in the carbonation curing tank is carbonation-cured, while supplying the flue gas exhausted from the thermal power plant to the inside of the carbonation curing tank and circulating the flue gas in the carbonation curing tank, without regulating the concentration and flow rate of the flue gas.

The second step, the object to be cured held in the carbonation curing tank is carbonation-cured while regulating the temperature and humidity of the flue gas in the carbonation curing tank.

Furthermore, in the second step the flue gas exhausted from the thermal power plant is brought into contact with water or water vapor before the flue gas is supplied to the inside of the carbonation curing tank.

In the first step, the object to be cured is held in the carbonation curing tank in volume such that the total amount of carbon dioxide emissions due to power consumption of the carbonation curing equipment during the carbonation curing period and carbon dioxide emissions due to concrete is equal to or less than "0."

Moreover, in the second step, all the flue gas exhausted from the thermal power plant is supplied to the inside of the carbonation curing tank.

Finally, the method described above is used for physically and chemically fixing carbon dioxide contained in the flue gas of a thermal power plant in the object, namely concrete (hardened cement paste), to be cured.

The carbonation curing equipment, the carbonated concrete producing method and use of the method for fixing carbon dioxide according to the present have the following effects.
(1) By using the thermal power plant as the carbon dioxide source, the high-concentration carbon dioxide can be supplied to the inside of the carbonation curing tank in a stable manner and in large quantities.
(2) The production cost of the carbonated concrete can be reduced because there is no need to purchase any commercial carbon dioxide cylinder.
(3) It is possible to greatly reduce the carbon dioxide emissions from the thermal power plant and to use the method for fixing carbon dioxide, because the carbon dioxide (greenhouse effect gas) contained in the flue gas exhausted from the thermal power plant is physically and chemically fixed in the object to be cured (concrete) by filling the carbon dioxide into the object to be cured.

### BRIEF DESCRIPTION OF THE DRAWINGS

Fig. 1 is a view to illustrate the configuration of a carbonation curing equipment 10 according to an embodiment of the present invention.
Fig. 2 illustrates materials of test pieces in use.
Fig. 3 illustrates two kinds of mix proportions used in an experiment; Fig. 3(a) illustrates the high-strength-type carbonated concrete mix proportion; and Fig. 3(b) illustrates the normal-strength-type carbonated concrete mix proportion.
Fig. 4 illustrates the test results of the fresh property.
Fig. 5 is a view illustrating the power consumption of the carbonation curing equipment 10 during the experiment, CO₂ emissions due to the power consumption, CO₂ emissions due to concrete, and CO₂ emissions according to the experiment; Fig. 5 (a) illustrates CO₂ emissions due to the power consumption; Fig. 5(b) illustrates CO₂ emissions due to the normal-strength-type carbonated concrete; and Fig. 5(c) illustrates CO₂ emissions according to the experiment.

### EMBODIMENTS OF THE INVENTION

The above purpose is achieved by carbonation-curing the object to be cured using the flue gas exhausted from the thermal power plant to produce the carbonated concrete.

Hereinafter, embodiments of the carbonation curing equipment, the carbonated concrete producing method and the ruse of the method for fixing carbon dioxide of the present invention will be described with reference to the drawings.

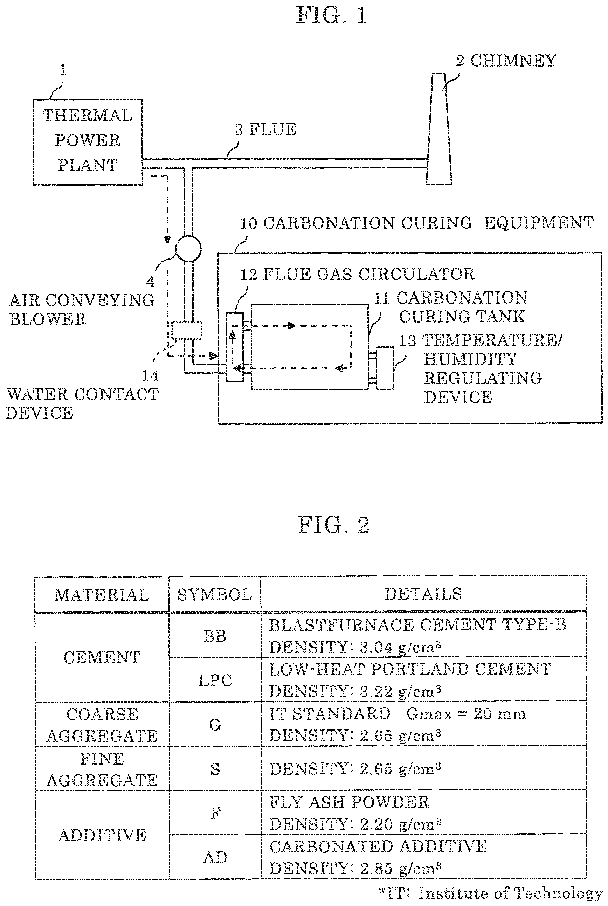

Carbonation curing equipment 10 according to an embodiment of the present invention is provided with, as shown in Fig. 1, a carbonation curing tank 11 having a shielded internal space, a flue gas circulator 12 for supplying the flue gas (exhaust gas) exhausted from a thermal power plant 1 to the inside of the carbonation curing tank 11 and for circulating the flue gas in the carbonation curing tank 11, and a temperature/humidity regulating device 13 for regulating the temperature and humidity of the flue gas in the carbonation curing tank 11.

Herein, in the carbonation curing tank 11, concrete (hardened cement paste) to be carbonation-cured, that is, an object to be carbonation-cured, is held in such a manner that its surface necessary to be carbonated is exposed to the gas atmosphere in the shielded space and in a form-removal state.

Furthermore, a flue gas feed pipe is branched out from a flue 3 for communicating (connecting) a flue gas exhaust port of the thermal power plant 1 and a chimney 2, and the flue gas exhausted (discharged) from the thermal power plant 1 is always supplied to the inside of the carbonation curing tank 11 through an air conveying blower 4 provided at the flue gas feed pipe and through the flue gas circulator 12 during the carbonation curing period.

Meanwhile, a water contact device 14 (a device for bringing the flue gas into contact with water or water vapor) may be provided between the air conveying blower 4 of the flue gas feed pipe and the flue gas circulator 12, as shown in the dotted line in Fig. 1, so that the flue gas exhausted from the thermal power plant 1 is brought into contact with water or water vapor before the flue gas is supplied to the inside of the carbonation curing tank 11 to improve the carbonation efficiency.

Next, an experiment of actual production of carbonated concrete using the carbonation curing equipment 10 as shown in Fig. 1 is described.

The temperature, humidity and flow rate of the flue gas exhausted from the thermal power plant 1 used in this experiment were 30 to 40 degrees centigrade, 30% and 1.8 m³/h. The concentration of carbon dioxide contained in the flue gas was 15 to 18%. So, the temperature and humidity of the flue gas in the carbonation curing tank 11 were maintained to the temperature and the humidity most suitable for the carbonation curing, that is, 50 degrees centigrade and 50%, by means of the temperature/humidity regulating device 13.

There were two kinds of mix proportion used in the experiment including the high-strength-type carbonated concrete mix proportion and the normal-strength-type carbonated concrete mix proportion. Test pieces were prepared in order to confirm the hardening property.

The amount of the additive added to the test pieces was determined according to the trial mix.

The materials in use are illustrated in Fig. 2.

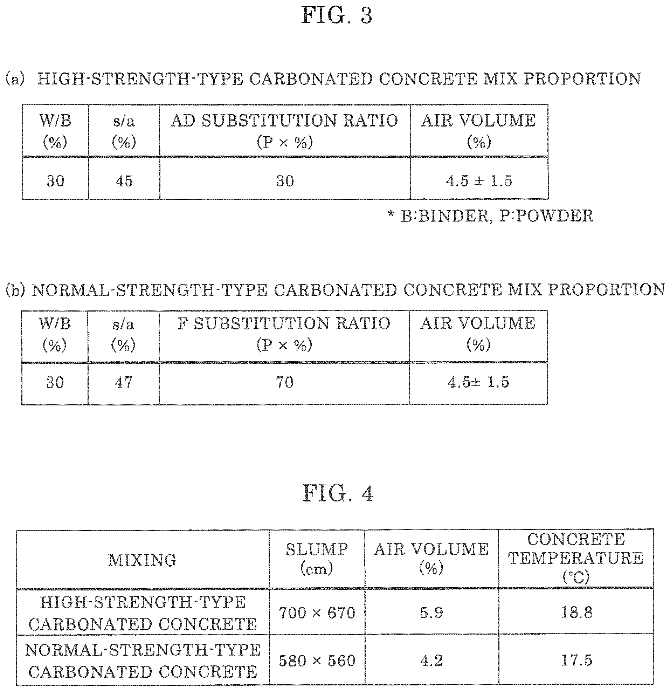

The aforementioned two kinds of mix proportion are illustrated in Figs. 3(a) and 3(b).

The mixing methods of the aforementioned two kinds of mix proportion are as follows.

### (1) High-strength-type Carbonated Concrete

Feeding excluding W and G → 15 seconds → Feeding W → 2 minutes → Scratching → Feeding G → 2 minutes → Ejecting

### (2) Normal-strength-type Carbonated Concrete

Feeding excluding W → 15 seconds → Feeding W → 1 minute → Scratching → 1 minute → Standing for 5 minutes → 30 seconds → Ejecting

The carbonation curing was carried out, after the placement process and the form-removal process, by conveying the test pieces to the thermal power plant 1 (conveying them which are being cured with the wet waste cloth, in the high-strength-type carbonated concrete mix proportion; and conveying them which are sealed, in the normal-strength-type carbonated concrete mix proportion) during the primary curing process (the water curing in the high-strength-type carbonated concrete mix proportion, and the sealed curing in the normal-strength-type carbonated concrete mix proportion) for one day, and then by doing the carbonation curing process for 14 days.

Herein, the carbonation curing process involved the verification of the possibility of uniform curing in the carbonation curing tank 11 by arranging the test pieces side by side at predetermined intervals in the front, center and inner part of the carbonation curing tank 11 in the lattice form with 18 rows and 4 columns. In addition, the test pieces were arranged such that the test pieces were raised with a two-tiered palette and set afloat with a camber.

The experiment results are as follows.

### (1) Fresh Test Results

Fig. 4 illustrates the test results of fresh property.

### (2) Temperature Measurement Results during Primary Curing

The test pieces were cured at 20 degrees centigrade for 1 day after the placement, and then were conveyed to the thermal power plant 1 after the form removal. The temperature was at least about 12 degrees centigrade during conveyance, and the huge drop in temperature was not confirmed.

### (3) Temperature and Humidity Measurement Results during Carbonation Curing

The temperature and humidity in the carbonation curing tank 11 were measured during the carbonation curing, and as a result, it was confirmed that the same curing environment (temperature of 50 degrees centigrade and humidity of 50%) was obtained as the set values passing through the carbonation curing period (carbonation age, 14 days). Also, the homogeneous curing environment in the carbonation curing tank 11 was confirmed.

### (4) Carbon Dioxide Concentration Measurement Results during Carbonation Curing

It took about 24 hours until the carbon dioxide concentration in the carbonation curing tank 11 reached the same concentration as that of the carbon dioxide contained in the flue gas of the thermal power plant 1, and the volume of the carbonation curing tank 11 was 37.5 m³. From such facts, it was considered that the flow rate of the flue gas supplied to the inside of the carbonation curing tank 11 was 1.6 m³/h (=37.5 m³/24h). As a result, since the flow rate of the flue gas exhausted from the thermal power plant 1 was 1.8 m³/h, it was confirmed that the flue gas was filled into the carbonation curing tank 11 with almost no loss.

The concentration of the carbon dioxide in the carbonation curing tank 11 was 13.5% average during the carbonation curing period of 14 days.

### (5) Hardening Property Measurement Results

### (5-1) High-strength-type Carbonated Concrete Mix Proportion

In the high-strength-type carbonated concrete mix proportion, the compression strength after the completion of the flue gas curing was 75 N/mm². On the other hand, the compression strength when this concrete was carbonation-cured using the commercial carbon dioxide was 85 N/mm², resulting in the difference of about 10 N/mm². On the other hand, the compression strength in the case of using the flue gas brought into contact with water or water vapor was 80 N/mm², reducing the difference by bringing the flue gas into contact with water or water vapor.

As a result, it was confirmed that there was no practical problem with the compression strength when the carbonation curing was carried out using the flue gas exhausted from the thermal power plant 1 (hereinafter, referred to as "the flue gas curing").

### (5-2) Normal-strength-Type Carbonated Concrete Mix Proportion

In the normal-strength-type carbonated concrete mix proportion, the compression strength after the completion of the flue gas curing was about 22 N/mm². On the other hand, the compression strength when this concrete was carbonation-cured using the commercial carbon dioxide was about 20 N/mm². The difference between these two values was very small.

As a result, it was confirmed that, when the flue gas curing (the carbonation curing using the flue gas exhausted from the thermal power plant 1) was carried out, concrete could be given performance equivalent to that of concrete when the carbonation curing was carried out by using the commercial carbon dioxide, regardless of the strength level.

### (6) CO₂ Emissions

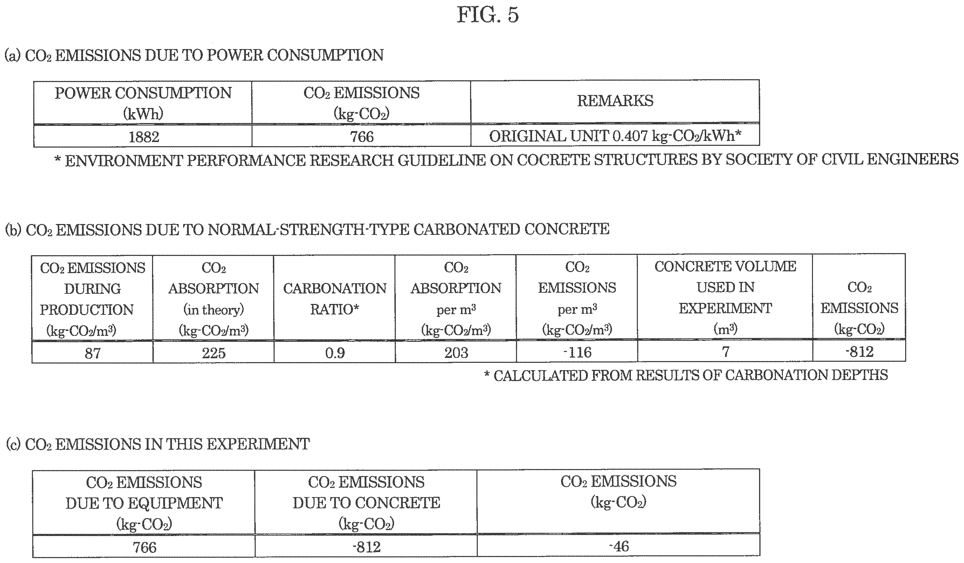

CO₂ emissions due to the power consumption of the carbonation curing equipment 10 during the experiment, CO₂ emissions due to the normal-type carbonated concrete and CO₂ emissions according to the experiment are illustrated in Figs. 5(a) to 5(c).

In this experiment, CO₂ emissions due to the electrical power consumed in the carbonation curing equipment 10 was 766 kg, while CO₂ emissions due to the concrete materials and CO₂ emissions due to the materials by absorption were -812 kg. It was calculated that the total 46 kg of CO₂ was absorbed.

According to the above description, the temperature and humidity of the flue gas in the carbonation curing tank 11 were maintained to the temperature and the humidity most suitable for the carbonation curing, that is, 50 degrees centigrade and 50%, by means of the temperature/humidity regulating device 13. However, when the temperature and humidity of the flue gas exhausted from the thermal power plant 1 are close to 50 degrees centigrade and 50%, the temperature/humidity regulating device 13 is no longer required.

Meanwhile, using the flue gas circulator 12, the flue gas exhausted from the thermal power plant 1 was supplied to the inside of the carbonation curing tank 11 and the flue gas was circulated in the carbonation curing tank 11. However, there is no particular need to circulate the flue gas in the carbonation curing tank 11 if the flue gas is supplied to the inside of the carbonation curing tank 11, for example, from 5 surfaces (the top surface and four side surfaces) excluding the bottom surface of the carbonation curing tank 11.

As described above, by carbonation-curing the object to be cured using the flue gas exhausted from the thermal power plant 1, the carbon dioxide contained in the flue gas exhausted from the thermal power plant 1 can be filled into the object to be cured, to be physically and chemically fixed therein. Therefore, it is possible to greatly reduce the carbon dioxide emissions from the thermal power plant and fix the carbon dioxide from the thermal power plant.

## Claims

1. Carbonation curing equipment (10) comprising:
a carbonation curing tank (11) having a shielded internal space wherein in the carbonation curing tank (11), an object, namely concrete (hardened cement paste), to be carbonation-cured is held in such a manner that its surface necessary to be carbonated is exposed to the gas atmosphere in the shielded space and in a form-removal state;
a flue gas circulator (12) for supplying the flue gas exhausted from
a thermal power plant (1) to the inside of the carbonation curing tank (11) and for circulating the flue gas in the carbonation curing tank (11);
a temperature/humidity regulating device (13) for regulating the temperature and humidity of the flue gas in the carbonation curing tank (11);
a flue gas feed pipe branched out from a flue (3) for communicating (connecting) a flue gas exhaust port of the thermal power plant (1) and a chimney (2), wherein the flue gas exhausted (discharged)from the thermal power plant (1) is supplied to the inside of the carbonation curing tank (11) through an air conveying blower (4) provided at the flue gas feed pipe (3) and through the flue gas circulator (12) during the carbonation curing period.

2. The carbonation curing equipment as set forth in Claim 1,
wherein the flue gas exhausted from the thermal power plant is supplied to the inside of the carbonation curing tank without regulating the concentration and the flow rate, and the object to be cured held in the carbonation curing tank is carbonation-cured.

3. The carbonation curing equipment as set forth in Claims 1 and 2, further comprising a device (14) for bringing the flue gas exhausted from the thermal power plant into contact with water or water vapor before the flue gas is supplied to the inside of the carbonation curing tank.

4. The carbonation curing equipment as set forth in any one of Claims 1 to 3, wherein the volume of the object to be cured held in the carbonation curing tank is such that the total amount of carbon dioxide emissions due to power consumption of the carbonation curing equipment during the carbonation curing period and carbon dioxide emissions due to concrete is equal to or less than "0".

5. The carbonation curing equipment as set forth in Claim 4, wherein all the flue gas exhausted from the thermal power plant is supplied to the inside of the carbonation curing tank during the carbonation curing period.

6. A carbonated concrete producing method **characterized by** comprising:
a first step of holding an object, namely concrete (hardened cement paste), to be cured in a carbonation curing tank (11) of a carbonation curing equipment (10), wherein the carbonation curing tank has a shielded internal space; and
a second step of supplying flue gas exhausted from a thermal power plant (1) to the inside of the carbonation curing tank in order to utilise the thermal power plant as a carbon dioxide source for carbonation-curing the object to be cured.

7. The carbonated concrete producing method as set forth in Claim 6, wherein in the second step, the object to be cured held in the carbonation curing tank is carbonation-cured, while supplying the flue gas exhausted from the thermal power plant to the inside of the carbonation curing tank and circulating the flue gas in the carbonation curing tank, without regulating the concentration and flow rate of the flue gas.

8. The carbonated concrete producing method as set forth in Claim 7, wherein in the second step, the object to be cured held in the carbonation curing tank is carbonation-cured while regulating the temperature and humidity of the flue gas in the carbonation curing tank.

9. The carbonated concrete producing method as set forth in any one of Claims 6 to 8, wherein in the second step, the flue gas exhausted from the thermal power plant is brought into contact with water or water vapor before the flue gas is supplied to the inside of the carbonation curing tank.

10. The carbonated concrete producing method as set forth in any one of claims 6 to 9, wherein in the first step, the object to be cured is held in the carbonation curing tank in volume such that the total amount of carbon dioxide emissions due to power consumption of the carbonation curing equipment during the carbonation curing period and carbon dioxide emissions due to concrete is equal to or less than "0".

11. The carbonated concrete producing method as set forth in Claim 10, wherein in the second step, all the flue gas exhausted from the thermal power plant is supplied to the inside of the carbonation curing tank.

12. Use of the method according to claims 6 to 11 for physically and chemically fixing carbon dioxide contained in the flue gas exhausted from a thermal power plant in the object, namely concrete (hardened cement paste), to be cured.

## Patentansprüche

1. Durch Carbonatisierung härtende Anlage (10), die Folgendes umfasst:
einen Tank zur Härtung durch Carbonatisierung (11), der einen abgeschirmten inneren Raum aufweist, wobei in dem Tank zur Härtung durch Carbonatisierung (11) ein Objekt, nämlich Beton (Zementstein), das durch Carbonatisierung zu härten ist, auf eine derartige Weise gehalten wird, dass seine Oberfläche, die carbonatisiert werden muss, der Gasatmosphäre in dem abgeschirmten Raum und in einem Entschalungszustand ausgesetzt wird;
einen Abgaszirkulator (12) für die Zuführung des Abgases, das aus einer Wärmekraftanlage (1) abgeführt wurde, zu dem Inneren des Tanks zur Härtung durch Carbonatisierung (11) und für die Zirkulation des Abgases in dem Tank zur Härtung durch Carbonatisierung (11);
eine Temperatur/Feuchtigkeit-regulierende Vorrichtung (13) für die Regulierung der Temperatur und Feuchtigkeit des Abgases in dem Tank zur Härtung durch Carbonatisierung (11);
eine Abgaszuführungsleitung, die sich von einem Abzug (3) verzweigt, für die Kommunikation (Verbindung) eines Abgasauslassanschlusses der Wärmekraftanlage (1) und eines Rauchabzugs (2), wobei das Abgas, das aus der Wärmekraftanlage (1) abgeführt (ausgestoßen) wurde, zu dem Inneren des Tanks zur Härtung durch Carbonatisierung (11) durch ein luftführendes Gebläse (4), das an der Abgaszuführungsleitung (3) bereitgestellt ist, und durch den Abgaszirkulator (12) während der Härtungsdauer durch Carbonatisierung zugeführt wird.

2. Durch Carbonatisierung härtende Anlage wie in Anspruch 1 dargelegt,
wobei das Abgas, das aus der Wärmekraftanlage abgeführt wurde, zu dem Inneren des Tanks zur Härtung durch Carbonatisierung ohne Regulierung der Konzentration und der Flussrate zugeführt wird und das zu härtende Objekt, das in dem Tank zur Härtung durch Carbonatisierung gehalten wird, durch Carbonatisierung gehärtet wird.

3. Durch Carbonatisierung härtende Anlage wie in Anspruch 1 und 2 dargelegt, die weiter Folgendes umfasst: eine Vorrichtung (14) für das Inkontaktbringen des Abgases, das aus der Wärmekraftanlage abgeführt wurde, mit Wasser oder Wasserdampf, bevor das Abgas zu dem Inneren des Tanks zur Härtung durch Carbonatisierung zugeführt wird.

4. Durch Carbonatisierung härtende Anlage wie in einem der Ansprüche 1 bis 3 dargelegt, wobei das Volumen des zu härtenden Objekts, das in dem Tank zur Härtung durch Carbonatisierung gehalten wird, derart ist, dass die Gesamtmenge von Kohlendioxidemissionen aufgrund des Energieverbrauchs der durch Carbonatisierung härtenden Anlage während der Härtungsdauer durch Carbonatisierung und Kohlendioxidemissionen aufgrund von Beton gleich oder weniger als "0" beträgt.

5. Durch Carbonatisierung härtende Anlage wie in Anspruch 4 dargelegt, wobei das gesamte Abgas, das aus der Wärmekraftanlage abgeführt wurde, zu dem Inneren des Tanks zur Härtung durch Carbonatisierung während der Härtungsdauer durch Carbonatisierung zugeführt wird.

6. Verfahren zur Herstellung von carbonatisiertem Beton, **dadurch gekennzeichnet, dass** es Folgendes umfasst:
einen ersten Schritt des Haltens eines Objekts, nämlich Beton (Zementstein), das in einem Tank zur Härtung durch Carbonatisierung (11) einer durch Carbonatisierung härtenden Anlage (10) zu härten ist, wobei der Tank zur Härtung durch Carbonatisierung einen abgeschirmten inneren Raum aufweist; und
einen zweiten Schritt des Zuführens von Abgas, das aus einer Wärmekraftanlage (1) abgeführt wurde, zu dem Inneren des Tanks zur Härtung durch Carbonatisierung, um die Wärmekraftanlage als Kohlendioxidquelle für das Härten durch Carbonatisierung des zu härtenden Objekts zu nutzen.

7. Verfahren zur Herstellung von carbonatisiertem Beton wie in Anspruch 6 dargelegt, wobei in dem zweiten Schritt das zu härtende Objekt, das in dem Tank zur Härtung durch Carbonatisierung gehalten wird, durch Carbonatisierung gehärtet wird, während das Abgas, das aus der Wärmekraftanlage abgeführt wurde, zu dem Inneren des Tanks zur Härtung durch Carbonatisierung zuführt wird und das Abgas in dem Tank zur Härtung durch Carbonatisierung zirkuliert wird, ohne die Konzentration und Flussrate des Abgases zu regulieren.

8. Verfahren zur Herstellung von carbonatisiertem Beton wie in Anspruch 7 dargelegt, wobei in dem zweiten Schritt das zu härtende Objekt, das in dem Tank zur Härtung durch Carbonatisierung gehalten wird, durch Carbonatisierung gehärtet wird, während die Temperatur und Feuchtigkeit des Abgases in dem Tank zur Härtung durch Carbonatisierung reguliert werden.

9. Verfahren zur Herstellung von carbonatisiertem Beton wie in einem der Ansprüche 6 bis 8 dargelegt, wobei in dem zweiten Schritt das Abgas, das aus der Wärmekraftanlage abgeführt wurde, mit Wasser oder Wasserdampf in Kontakt gebracht wird, bevor das Abgas zu dem Inneren des Tanks zur Härtung durch Carbonatisierung zugeführt wird.

10. Verfahren zur Herstellung von carbonatisiertem Beton wie in einem der Ansprüche 6 bis 9 dargelegt, wobei in dem ersten Schritt das zu härtende Objekt in dem Tank zur Härtung durch Carbonatisierung im Volumen derart gehalten wird, dass die Gesamtmenge von Kohlendioxidemissionen aufgrund des Energieverbrauchs der durch Carbonatisierung härtenden Anlage während der Härtungsdauer durch Carbonatisierung und Kohlendioxidemissionen aufgrund von Beton gleich oder weniger als "0" beträgt.

11. Verfahren zur Herstellung von carbonatisiertem Beton wie in Anspruch 10 dargelegt, wobei in dem zweiten Schritt das gesamte Abgas, das aus der Wärmekraftanlage abgeführt wurde, zu dem Inneren des Tanks zur Härtung durch Carbonatisierung zugeführt wird.

12. Verwendung des Verfahrens nach Anspruch 6 bis 11 für physikalisches und chemisches Fixieren von Kohlendioxid, das in dem Abgas enthalten ist, das aus einer Wärmekraftanlage abgeführt wurde, in dem Objekt, nämlich Beton (Zementstein), das zu härten ist.

## Revendications

1. Équipement de durcissement par carbonatation (10) comprenant :
un réservoir de durcissement par carbonatation (11) ayant un espace interne protégé où, dans le réservoir de durcissement par carbonatation (11), un objet, à savoir du béton (pâte de ciment durcie), à durcir par carbonatation est maintenu d'une manière telle que sa surface, à laquelle on doit faire subir une carbonatation, est exposée à l'atmosphère gazeuse dans l'espace protégé et dans un état démoulé ;
un dispositif de circulation de gaz de combustion (12) pour introduire le gaz de combustion évacué à partir d'une centrale thermique (1) à l'intérieur du réservoir de durcissement par carbonatation (11) et pour faire circuler le gaz de combustion dans le réservoir de durcissement par carbonatation (11) ;
un dispositif de régulation de température/humidité (13) pour réguler la température et l'humidité du gaz de combustion dans le réservoir de durcissement par carbonatation (11) ;
un tuyau d'alimentation en gaz de combustion en dérivation à partir d'un conduit (3) pour faire communiquer (relier) un orifice d'évacuation de gaz de combustion de la centrale thermique (1) et une cheminée (2), où le gaz de combustion évacué (déchargé) à partir de la centrale thermique (1) est introduit à l'intérieur du réservoir de durcissement par carbonatation (11) par l'intermédiaire d'un ventilateur soufflant de transport d'air (4) disposé au niveau du tuyau d'alimentation en gaz de combustion (3) et par l'intermédiaire du dispositif de circulation de gaz de combustion (12) pendant la période de durcissement par carbonatation.

2. Équipement de durcissement par carbonatation tel qu'indiqué dans la revendication 1, où le gaz de combustion évacué à partir de la centrale thermique est introduit à l'intérieur du réservoir de durcissement par carbonatation sans réguler la concentration et le débit, et l'objet à durcir maintenu dans le réservoir de durcissement par carbonatation est durci par carbonatation.

3. Équipement de durcissement par carbonatation tel qu'indiqué dans les revendications 1 et 2, comprenant en outre un dispositif (14) pour amener le gaz de combustion évacué à partir de la centrale thermique en contact avec de l'eau ou de la vapeur d'eau avant que le gaz de combustion ne soit introduit à l'intérieur du réservoir de durcissement par carbonatation.

4. Équipement de durcissement par carbonatation tel qu'indiqué dans l'une quelconque des revendications 1 à 3, où le volume de l'objet à durcir maintenu dans le réservoir de durcissement par carbonatation est tel que la quantité totale d'émissions de dioxyde de carbone dues à la consommation d'énergie de l'équipement de durcissement par carbonatation pendant la période de durcissement par carbonatation et d'émissions de dioxyde de carbone dues au béton est égale ou inférieure à « 0 ».

5. Équipement de durcissement par carbonatation tel qu'indiqué dans la revendication 4, où la totalité du gaz de combustion évacué à partir de la centrale thermique est introduite à l'intérieur du réservoir de durcissement par carbonatation pendant la période de durcissement par carbonatation.

6. Procédé de production de béton carbonaté **caractérisé en ce qu'**il comprend :
une première étape consistant à maintenir un objet, à savoir du béton (pâte de ciment durcie), à durcir dans un réservoir de durcissement par carbonatation (11) d'un équipement de durcissement par carbonatation (10), où le réservoir de durcissement par carbonatation a un espace interne protégé ; et
une deuxième étape consistant à introduire le gaz de combustion évacué à partir d'une centrale thermique (1) à l'intérieur du réservoir de durcissement par carbonatation afin d'utiliser la centrale thermique comme source de dioxyde de carbone pour le durcissement par carbonatation de l'objet à durcir.

7. Procédé de production de béton carbonaté tel qu'indiqué dans la revendication 6, où, dans la deuxième étape, l'objet à durcir maintenu dans le réservoir de durcissement par carbonatation est durci par carbonatation, tout en introduisant le gaz de combustion évacué à partir de la centrale thermique à l'intérieur du réservoir de durcissement par carbonatation et en faisant circuler le gaz de combustion dans le réservoir de durcissement par carbonatation, sans réguler la concentration et le débit du gaz de combustion.

8. Procédé de production de béton carbonaté tel qu'indiqué dans la revendication 7, où, dans la deuxième étape, l'objet à durcir maintenu dans le réservoir de durcissement par carbonatation est durci par carbonatation tout en régulant la température et l'humidité du gaz de combustion dans le réservoir de durcissement par carbonatation.

9. Procédé de production de béton carbonaté tel qu'indiqué dans l'une quelconque des revendications 6 à 8, où, dans lequel la deuxième étape, le gaz de combustion évacué à partir de la centrale thermique est amené en contact avec de l'eau ou de la vapeur d'eau avant que le gaz de combustion ne soit introduit à l'intérieur du réservoir de durcissement par carbonatation.

10. Procédé de production de béton carbonaté tel qu'indiqué dans l'une quelconque des revendications 6 à 9, où, dans la première étape, l'objet à durcir est maintenu dans le réservoir de durcissement par carbonatation dans un volume tel que la quantité totale d'émissions de dioxyde de carbone dues à la consommation d'énergie de l'équipement de durcissement par carbonatation pendant la période de durcissement par carbonatation et d'émissions de dioxyde de carbone dues au béton est égale ou inférieure à « 0 ».

11. Procédé de production de béton carbonaté tel qu'indiqué dans la revendication 10, où, dans la deuxième étape, la totalité du gaz de combustion évacué à partir de la centrale thermique est introduite à l'intérieur du réservoir de durcissement par carbonatation.

12. Utilisation du procédé selon les revendications 6 à 11 pour la fixation physique et chimique du dioxyde de carbone contenu dans le gaz de combustion évacué à partir d'une centrale thermique dans l'objet, à savoir du béton (pâte de ciment durcie), à durcir.
